# EUROPÄISCHE PATENTANMELDUNG

(11) **EP 0 853 235 A1**
(43) Veröffentlichungstag der Anmeldung: **15.07.1998**
(21) Anmeldenummer: 97122514.9
(22) Anmeldetag: 19.12.1997
(51) Int. Cl.: G01F 23/20

(54) **Füllstandsmesseinrichtung für Druckgasflaschen**

(30) Priorität: 21.12.1996 DE 29623249 U
(71) Anmelder: Anschütz, Rolf-W., Dr.-Ing., 09114 Chemnitz (DE)
(72) Erfinder: Anschütz, Rolf-W., Dr.-Ing., 09114 Chemnitz (DE)
(74) Vertreter: Findeisen, Andreas

(57) **Zusammenfassung**

Die Erfindung betrifft eine Wägeeinrichtung, mit der das zum Zeitpunkt der Messung vorhandene Gewicht von undurchsichtigen Behältern, vorzugsweise von Druckgasflaschen, ermittelt wird. Es wird die Aufgabe gelöst, eine solche Füllstandsmeßeinrichtung zu schaffen, die lediglich geringe manuelle Handhabungen mit geringem Kraftaufwand bei Inbetriebnahme der Wägeeinrichtung erfordert und gleichzeitig eine kontinuierliche Meßwertanzeige gewährleistet. Dies wird erreicht, indem die Wägeeinrichtung einen Grundkörper (1) aufweist, der mit dem Fußring (3) der Druckgasflasche (4) lösbar verbindbar ist und an dem mindestens drei Auflageelemente (5;6;7) zur Abstützung der Druckgasflasche (4) angeordnet sind, wobei einem Auflageelement (7) eine, von der Druckgasflasche (4) beaufschlagbare Gewichtskraftmeßeinheit (8) zugeordnet ist.

## Beschreibung

Die Erfindung betrifft eine Füllstandsmeßeinrichtung für Druckgasflaschen, bestehend aus einer der Druckgasflasche zugeordneten Wägeeinrichtung, mit der das zum Zeitpunkt der Messung vorhandene Gewicht der Druckgasflasche ermittelt wird und wobei durch Vergleich dieses Gewichts mit dem Gewicht zum Zeitpunkt der ersten vollständigen Flaschenfüllung oder mit dem Leergewicht der Druckgasflasche eine Aussage zur möglichen Restnutzung der Druckgasflasche aus der Ist-Flaschenfüllung erzielt wird.

Druckgasflaschen werden für verschiedenartige Anwendungen benötigt, bei denen kein Gas-Netzanschluß verfügbar ist, z.B. als Brennstoffbehälter für den Betrieb von Koch- und Heizgeräten in ländlichen Gebieten, in Wohnmobilen, beim Camping oder bei gewerblichem Einsatz. Aufgrund der zu beachtenden Sicherheitsvorschriften werden Druckgasflaschen vorzugsweise als kompakte Metallhohlkörper gefertigt. Diese Konstruktion bedingt für den Anwender Probleme, weil er im gesamten Benutzungsintervall keine Information über den jeweiligen Füllstand (Ist-Flaschenfüllung) der Druckgasflasche erhält. Der Anwender ist somit nicht in der Lage, die mögliche Restnutzung aus der Ist-Flaschenfüllung abzuleiten.

Dieser Nachteil kann zwar im häuslichen Bereich weitgehend vernachlässigt werden, da überwiegend eine zweite Druckgasflasche als Vorrat vorhanden ist. Bei nichtstationären Anwendungen kann die fehlende Möglichkeit einer Aussage zur Restnutzung jedoch erhebliche Nachteile ergeben, weil insbesondere aus Platzgründen - z.B. begrenztes Kofferraumvolumen im PKW durch die bei einer Urlaubsfahrt ohnehin notwendige Ausrüstung - keine zweite Druckgasflasche mitgeführt werden kann.

Die mögliche Restnutzung der Ist-Flaschenfüllung wird oftmals mit ausschließlich subjektiven Bewertungskriterien eingeschätzt, z.B. durch Notieren der jeweiligen Benutzungsdauer oder lediglich durch Schütteln oder Anheben der Druckgasflasche. Trotz der offensichtlichen Mängel einer derartigen subjektiven Bewertung ist zumindest dann eine grobe Aussage zum Füllgrad erreichbar, sofern der Anwender die zu bewertende Druckgasflasche regelmäßig benutzt. Insbesondere bei seltener Benutzung (z.B. jährliche Urlaubsfahrt) oder bei häufigem Nutzerwechsel (z.B. Installateure auf Baustellen oder Verkaufspersonal an Imbißständen) ist jedoch keine ausreichend genaue Bewertung möglich, ob die noch vorhandene Gasmenge für die beabsichtigte Anwendung genügt oder ob eine weitere, vollständig gefüllte Druckgasflasche bereitgestellt werden muß.

Weitgehend objektive Einschätzungen der möglichen Restnutzung sind grundsätzlich möglich, indem das jeweils aktuelle Gewicht der Druckgasflasche ermittelt und mit dem Gewicht zum Zeitpunkt der ursprünglichen, vollständigen Flaschenfüllung oder mit dem Leergewicht der Druckgasflasche verglichen wird. Für solche Messungen wurde bereits die Anwendung von Federzugwaagen vorgeschlagen, die von mehreren Campingausstattern angeboten werden. Derartige Federzugwaagen für Gasflaschen werden entweder vom Anwender gehalten oder an geeigneten Hilfsmitteln, z.B. einem starken Ast bei Benutzung auf dem Campingplatz, aufgehangen. In jedem Fall muß der Anwender jedoch die gesamte Druckgasflasche, gegebenenfalls auch mittels der Federwaage, zunächst anheben, an der Federwaage anhängen und nachfolgend wieder absetzen. Unter Beachtung der allgemein üblichen Flaschengrößen (5 kg, 11 kg und 33 kg) kann dieser Vorgang für kleinere Druckgasflaschen noch mit vertretbarer Kraftanstrengung vom Anwender realisiert werden. Bei Benutzung größerer Druckgasflaschen ist das notwendige Anheben jedoch nur für körperlich durchtrainierte Anwender möglich.

Unabhängig vom notwendigen Kraftaufwand wird dieser Meßvorgang erschwert, sofern sich die zu messende Druckgasflasche im installierten Zustand befindet. Für die Dauer der Messung muß überwiegend die Arbeitsbereitschaft der Druckgasflasche unterbrochen werden. Falls die Installation nicht gelöst wird, ergibt sich eine erheblich eingeschränkte Zugänglichkeit. Außerdem wird das Ergebnis der Messung auch durch die montierten Anschlußbaugruppen verfälscht. Ein weiterer Nachteil bekannter Federzugwaagen besteht darin, daß ihre Anwendung immer manuelle Handhabungen an der Druckgasflasche erfordert und ein Meßergebnis nur zum Zeitpunkt des unmittelbaren "Hängens" der Druckgasflasche abgelesen werden kann.

Aufgabe der Erfindung ist es, eine Füllstandsmeßeinrichtung für Druckgasflaschen zu schaffen, die lediglich geringe manuelle Handhabungen mit geringem Kraftaufwand bei Inbetriebnahme der Wägeeinrichtung erfordert und gleichzeitig eine kontinuierliche Meßwertanzeige gewährleistet. Dies soll ohne Veränderungen am grundsätzlichen Konstruktionsprinzip von Druckgasflaschen als kompakte Metallhohlkörper erreicht werden, insbesondere durch eine der Druckgasflasche lösbar zugeordnete Wägeeinrichtung.

Diese Aufgabe wird durch die in den Patentansprüchen dargelegten Merkmale gelöst. Die Anwendung der erfindungsgemäßen Füllstandsmeßeinrichtung ergibt zahlreiche Vorteile: Die Meßeinrichtung kann für mehrere Größen von Druckgasflaschen verwendet werden. Manuelle Handhabungen zur Montage der Meßeinrichtung sind lediglich einmal notwendig. Diese Montage wird vorzugsweise bei der erstmaligen Inbetriebnahme der vollständig gefüllten Druckgasflasche vorgesehen, weil zu diesem Zeitpunkt die Druckgasflasche ohnehin manuell bewegt und installiert werden muß. Die Meßeinrichtung gewährleistet zu jedem Zeitpunkt und völlig unabhängig vom Betriebszustand der Gasanwendungsanlage eine eindeutige Aussage zur möglichen Restnutzung der Ist-Flaschenfüllung. Als Eichkriterium kann sowohl das Gewicht der vollen als auch der leeren Druckgasflasche verwendet werden.

Ein Ausführungsbeispiel der Erfindungist in der Zeichnung dargestellt und wird nachfolgend beschrieben. Es zeigen:
- Fig. 1: eine erfindungsgemäße Füllstandsmeßeinrichtung für Druckgasflaschen in Seitenansicht und Draufsicht
- Fig. 2: einen Querschnitt durch ein Auflageelement
- Fig. 3: den grundsätzlichen Aufbau einer Auflageeinheit mit Gewichtskraftmeßeinheit und mechanischem Meßprinzip
- Fig. 4: den grundsätzlichen Aufbau einer Auflageeinheit mit Gewichtskraftmeßeinheit und elektrischem Meßprinzip

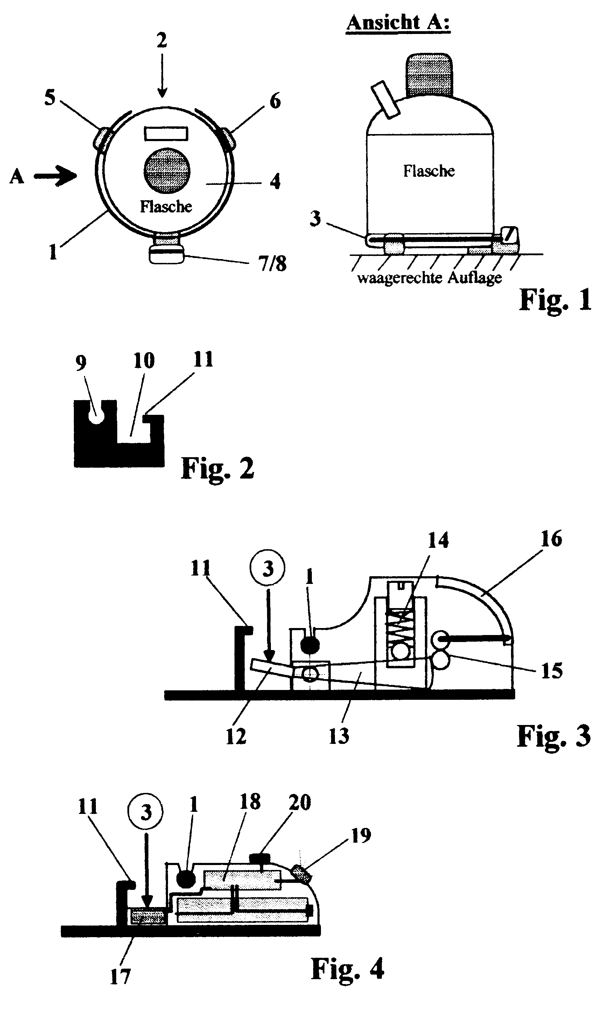

Die in der Zeichnung dargestellte Füllstandsmeßeinrichtung besteht aus einer Wägeeinrichtung, die einen Grundkörper 1 aufweist. Der Grundkörper kann, wie in Fig. 1 dargestellt, z.B. mit kreisringförmiger Kontur gestaltet werden. Hierbei ist der Grundkörper 1 nicht als vollständig geschlossener Kreis ausgestaltet, sondern er hat eine partiell unterbrochene Ringkontur 2. Der Grundkörper 1 wird mit dem Fußring 3 der Druckgasflasche 4 über Aufnahmeelemente lösbar verbunden, wobei mindestens drei Auflageelemente 5, 6 und 7 zur Abstützung der Druckgasflasche 4 vorgesehen sind. Die Auflageelemente 5 bis 7 aus elastizierbaren Werkstoffen sind mit jeweils gleichen Abständen voneinander am Grundkörper 1 angeordnet. Im gezeigten Ausführungsbeispiel mit drei Auflageelementen also in einem Winkel von jeweils 120° zwischen zwei benachbarten Auflageelementen. Während die Auflageelemente 5 und 6 ausschließlich eine Abstützfunktion realisieren, ist dem dritten Auflageelement 7 eine Gewichtskraftmeßeinheit 8 zugeordnet, die von der Gewichtskraft der Druckgasflasche 4 über deren Fußring 3 beaufschlagt wird.

Die am Grundkörper 1 angeordneten Auflageelemente 5 bis 7 weisen jeweils zwei Abschnitte mit unterschiedlicher Profilierung auf. Der erste Abschnitt hat eine dem Profil des Grundkörpers 1 kongruente Ausnehmung 9 und der zweite Abschnitt hat eine der Kontur des Fußringes 3 kongruente Ausnehmung 10 mit einer zusätzlichen Fixierlippe 11.

Die dem Aufnahmeelement 7 zugeordnete Gewichtskraftmeßeinheit 8 kann in Abhängigkeit der jeweiligen Einsatzbedingungen mit verschiedenen Meßsystemen ausgerüstet werden. In Fig. 3 ist eine Gewichtskraftmeßeinheit 8 mit mechanischem Meßprinzip dargestellt. Die Meßeinheit 8 weist hierbei im Bereich der kongruenten Ausnehmung 10 einen, vom Fußring 3 beaufschlagbaren Kipphebel 12 auf. Der entgegengesetzte Hebelarm 13 ist entgegen der Kraft einer Feder mit Stellschraube 14 verlagerbar und wirkt durch Übertragungs- und Übersetzungsbauteile 15, z.B. verzahnte Bauteile, auf eine Meßwertanzeige 16. In Fig. 3 wird eine analoge Meßwertanzeige 16 mit mechanischem Zeigerwerk verwendet. Die Information über den jeweiligen Füllstand der Druckgasflasche 4 wird durch unterschiedliche Zeigerstellungen dokumentiert. Die Skala kann mit konkreten Angaben in "kg" oder auch lediglich mit unterschiedlichen Farbbereichen gestaltet werden. Die Konstruktion gemäß Fig. 3 ergibt durch ihren einfachen mechanischen Aufbau eine wartungsfreie, temperaturunempfindliche und relativ robuste Meßeinheit. Diese technische Lösung ist vorzugsweise für schwierige Einsatzbedingungen geeignet, z.B. für einen Einsatz auf Baustellen auch bei Minusgraden.

Als Alternative zu der in Fig. 3 gezeigten Gewichtskraftmeßeinheit 8 mit mechanischem Meßprinzip kann auch ein elektrisches Meßprinzip vorgesehen werden. Eine entsprechende Anordnung ist in Fig. 4 dargestellt. Die Meßeinheit 8 weist hierbei im Bereich der kongruenten Ausnehmung 10 einen, vom Fußring 3 beaufschlagbaren Drucksensor 17 auf. Die vom Drucksensor 17 erfaßten Meßwerte werden über eine elektronische Auswerteeinheit 18 verarbeitet und mittels einer Meßwertanzeige 19 angezeigt. Als Drucksensor kann eine Kraftmeßdose oder ein induktiver Geber verwendet werden. Im gezeigten Ausführungsbeispiel wird eine Meßwertanzeige 19 mit mehreren Lumineszenzdioden verwendet. Die Information über den jeweiligen Füllstand der Druckgasflasche 4 wird durch verschiedenfarbige Dioden dokumentiert. Mit einem Zeitschalter 20 kann diese Baugruppe geschalten werden. Diese Konstruktion gemäß Fig. 4 ergibt ebenso wie die in Fig. 3 gezeigte technische Lösung eine wartungsfreie und relativ robuste Meßeinheit, wobei der Einsatz dieser Lösung vorzugsweise bei Raumtemperaturen erfolgen sollte.

### Aufstellung der verwendeten Bezugszeichen: 99t0b0s10.90h11.00v0P

- **1**: **Grundkörper**
- **2**: **unterbrochene Ringkontur bei kreisförmigem Grundkörper**
- **3**: **Fußring der Druckgasflasche**
- **4**: **Druckgasflasche**
- **5**: **Auflageelement mit Abstützfunktion**
- **6**: **Auflageelement mit Abstützfunktion**
- **7**: **Auflageelement mit Abstütz- und Meßfunktion**
- **8**: **Gewichtskraftmeßeinheit**
- **9**: **Abschnitt mit dem Profil des Grundkörpers kongruenter Ausnehmung**
- **10**: **Abschnitt mit der Kontur des Fußringes kongruenter Ausnehmung**
- **11**: **Fixierlippe**
- **12**: **Kipphebel**
- **13**: **Hebelarm**
- **14**: **Feder mit Stellschraube**
- **15**: **Übertragungs- und Übersetzungsbauteile**
- **16**: **analoge Meßwertanzeige**
- **17**: **Drucksensor**
- **18**: **elektronische Auswerteeinheit**
- **19**: **elektronische Meßwertanzeige**
- **20**: **Zeitschalter**

## Patentansprüche

1. Füllstandsmeßeinrichtung für Druckgasflaschen, bestehend aus einer der Druckgasflasche zugeordneten Wägeeinrichtung, mit der das zum Zeitpunkt der Messung vorhandene Gewicht der Druckgasflasche ermittelt wird und wobei durch Vergleich dieses Gewichts mit dem Gewicht zum Zeitpunkt der ersten vollständigen Flaschenfüllung oder mit dem Leergewicht der Druckgasflasche eine Aussage zur möglichen Restnutzung der Druckgasflasche aus der Ist-Flaschenfüllung erzielt wird,
dadurch gekennzeichnet,
daß die Wägeeinrichtung einen Grundkörper (1) aufweist, der mit dem Fußring (3) der Druckgasflasche (4) lösbar verbindbar ist und an dem mindestens drei Auflageelemente (5;6;7) zur Abstützung der Druckgasflasche (4) angeordnet sind, wobei einem Auflageelement (7) eine, von der Druckgasflasche (4) beaufschlagbare Gewichtskraftmeßeinheit (8) zugeordnet ist.

2. Füllstandsmeßeinrichtung für Druckgasflaschen nach Anspruch 1, dadurch gekennzeichnet,
daß der Grundkörper (1) kreisringförmig ausgestaltet ist und eine partiell unterbrochene (2) Ringkontur aufweist.

3. Füllstandsmeßeinrichtung für Druckgasflaschen nach Anspruch 1, dadurch gekennzeichnet,
daß die Auflageelemente (5;6;7) mit jeweils gleichen Abständen voneinander am Grundkörper (1) angeordnet sind.

4. Füllstandsmeßeinrichtung für Druckgasflaschen nach Anspruch 1, dadurch gekennzeichnet,
daß die am Grundkörper (1) angeordneten Auflageelemente (5;6; 7) einen ersten Abschnitt mit einer, dem Profil des Grundkörpers (1) kongruenten Ausnehmung (9) und einen zweiten Abschnitt mit einer, der Kontur des Fußringes (3) kongruenten Ausnehmung (10) mit einer Fixierlippe (11) aufweisen.

5. Füllstandsmeßeinrichtung für Druckgasflaschen nach den Ansprüchen 1 und 4, dadurch gekennzeichnet,
daß das am Grundkörper (1) angeordnete Auflageelement (7) mit zugeordneter Gewichtskraftmeßeinheit (8) im Bereich seiner, der Kontur des Fußringes (3) kongruenten Ausnehmung (10) einen, vom Fußring (3) beaufschlagbaren Kipphebel (12) aufweist, dessen entgegengesetzter Hebelarm (13), der entgegen der Kraft einer Feder mit Stellschraube (14) verlagerbar ist, durch Übertragungs- und Übersetzungsbauteile (15) mit einer analogen Meßwertanzeige (16) verbunden ist.

6. Füllstandsmeßeinrichtung für Druckgasflaschen nach den Ansprüchen 1, 4 und 5 dadurch gekennzeichnet,
daß die analoge Meßwertanzeige (16) ein mechanisches Zeigerwerk aufweist, wobei unterschiedliche Füllstandniveaus der Druckgasflasche (4) auf der Meßwertanzeige (16) durch verschiedene Farbbereiche dargestellt werden.

7. Füllstandsmeßeinrichtung für Druckgasflaschen nach den Ansprüchen 1 und 4, dadurch gekennzeichnet,
daß das am Grundkörper (1) angeordnete Auflageelement (7) mit zugeordneter Gewichtskraftmeßeinheit (8) im Bereich seiner, der Kontur des Fußringes (3) kongruenten Ausnehmung (10) einen, vom Fußring (3) beaufschlagbaren Drucksensor (17) aufweist, dessen Meßwerte über eine elektronische Auswerteeinheit (18) verarbeitet werden, der eine elektronische Meßwertanzeige (19) zugeordnet ist.

8. Füllstandsmeßeinrichtung für Druckgasflaschen nach den Ansprüchen 1, 4 und 7, dadurch gekennzeichnet,
daß als Drucksensor (17) eine Kraftmeßdose verwendet wird.

9. Füllstandsmeßeinrichtung für Druckgasflaschen nach den Ansprüchen 1, 4 und 7, dadurch gekennzeichnet,
daß als Drucksensor (17) ein induktiver Geber verwendet wird.

10. Füllstandsmeßeinrichtung für Druckgasflaschen nach den Ansprüchen 1, 4 und 7, dadurch gekennzeichnet,
daß die elektronische Meßwertanzeige (19) durch einen Zeitschalter (20) aktivierbar ist und mehrere Lumineszenzdioden aufweist, wobei unterschiedliche Füllstandniveaus der Druckgasflasche (4) auf der Meßwertanzeige (19) durch verschiedenfarbige Dioden dargestellt werden.
